# EUROPEAN PATENT APPLICATION

(11) **EP 4 414 908 A1**
(43) Date of publication of application: **14.08.2024**
(21) Application number: 23155346.2
(22) Date of filing: 07.02.2023
(51) Int. Cl.: G06Q 10/06

(54) **DATA MONITORING FRAMEWORK FOR ENGINEERING PROCESSES**

(71) Applicant: Siemens Mobility Austria GmbH, 1210 Wien (AT)
(72) Inventor: Haselböck, Alois, 3394 Schönbühel-Aggsbach (AT); Sperl, Simon, 4030 Linz (AT)
(74) Representative: Siemens Patent Attorneys

(57) **Abstract**

The invention relates to a computer implemented method for providing consistency of data (D) in an engineering process (EP), wherein the data (D) represents parameters of tasks (T) in the engineering process (EP), comprising steps of:
a. Defining relevant data (D_i) for a task (T_i);
b. Periodically monitoring the relevant data (D_i) for the task (T_i);
c. Notifying the task (T_i) when changes in the data (D_i) occur.

## Description

*Independent of the grammatical term usage, individuals with male, female or other gender identities are included within the term.*

### FIELD OF THE INVENTION

This application relates to engineering processes. More particularly, this application relates to a computer implemented method for providing consistency of data in an engineering process.

### BACKGROUND OF THE INVENTION

An engineering process is the set of activities to collaboratively plan and create a technical system or product. Inherent in such processes is the involvement of many different types of data and artefacts. Such data and artefacts are frequently modified during the engineering process, and the management of these changes is crucial.

Change management is inherent to projects. Even more so, since projects, technical or functional are actually all about change, i.e. going from a current situation to a desired one.

Examples of data changes: The customer may send updated versions of the customer input documents. Engineers of one subsystem generate new interface files to be used by another subsystem.

If changes to such data or artefacts is not taken into account by all the tasks that use that data or artefacts in a timely manner, errors will arise due to non-synchronous data statuses. This degrades the quality of the target product and causes high costs for the correction of such errors in a later engineering phase.

Change management tools (like GIT, Clearcase, etc.) are usually used to manage data versions. These tools can reliably store data and the history of changes. But the weak point is: how will everyone be notified of changes to their data?

In most engineering tasks, data changes are communicated by a human activity, e.g. the person who checked in a new file version sends an email to the colleagues to informs them of the changes. This is not very reliable as people make mistakes or forget something.

Engineering processes are variants of business processes. In such conventional business process management frameworks, changes of process data are detected by events. Such events must be handled in the process. Processes with a complete handling of all types of data changes are becoming very complex and in practice hardly manageable.

It is therefore a goal of the present invention to provide a computer implemented method for providing consistency of data in an engineering process, which overcomes the above-mentioned disadvantages and in which efficient handling of data consistency and data integrity is guaranteed with minimal delay and an acceleration of processes.

### SUMMARY OF THE INVENTION

According to aspects of one embodiment of this disclosure, a computer implemented method for providing consistency of data in an engineering process is disclosed, wherein the data represents parameters of tasks in the engineering process, comprising steps of:
a. Defining relevant data for a task;
b. Periodically monitoring the relevant data for the task;
c. Notifying the task when changes in the data occur.

The key advantages of the invention are that all engineering tasks work on an up-to-date, consistent and synchronized set of data. The invention is based on periodical monitoring (polling), instead of on events as in existing business process management tools. Getting change events from different systems is quite hard. Periodical monitoring (polling) allows easy and reliable detection of all data changes, especially if they were made by parties outside the process. The invention guarantees efficient handling of data consistency and data integrity with minimal delay and an acceleration of processes.

Additionally in some embodiments, the monitoring in step b comprises the following steps:

| | |
|---|---|
| b1. | Retrieving a latest version of the data and a second-latest version of the data by a monitoring process; |
| b2. | Comparing the latest version of the data to the second-latest version of the data by the monitoring process; |
| b3. | Creating a delta file that comprises differences between the latest version of the data and the second-latest version of the data by the monitoring process when there are differences. |

and step c comprises the following step:

| | |
|---|---|
| c1 | Providing the delta file (Δ_i) to the task (T_i) by the monitoring process (MP_i) when there are differences. |

Saving the current version of the data that a task has been working on allows to support a change impact analysis by comparing old and new data versions. This also allows to identify that some changes do not have any effect on the process and therefore saves processing resources, work and makes the process more efficient.

According to an embodiment, there is at least one second task, at least one second relevant data for the at least one second task and at least one second monitoring process.

Therefore, it is possible for multiple tasks to be monitored and data consistency is guaranteed for all tasks in the engineering process, which typically consists of multiple tasks.

Additionally in some embodiments, there is a data processing apparatus, comprising means for carrying out the computer implemented method as described above.

Additionally in some embodiments, there is a computer program product comprising instructions which, when the program is executed by a computer, cause the computer to carry out the steps of the computer implemented method as described above.

Additionally in some embodiments, there is a computer-readable storage medium comprising instructions which, when executed by a computer, cause the computer to carry out the steps of the steps of the computer implemented method as described above.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following figures:
Fig. 1 shows an example of an engineering process, data and changes to the data,
Fig. 2 shows a diagram of tasks, a monitoring process and data,
Fig. 3 shows the invention according to a first embodiment, and
Fig. 4 shows the invention according to a second embodiment.

The illustration in the drawings is in schematic form. It is noted that in different figures, similar or identical elements may be provided with the same reference signs.

### DESCRIPTION OF THE DRAWINGS

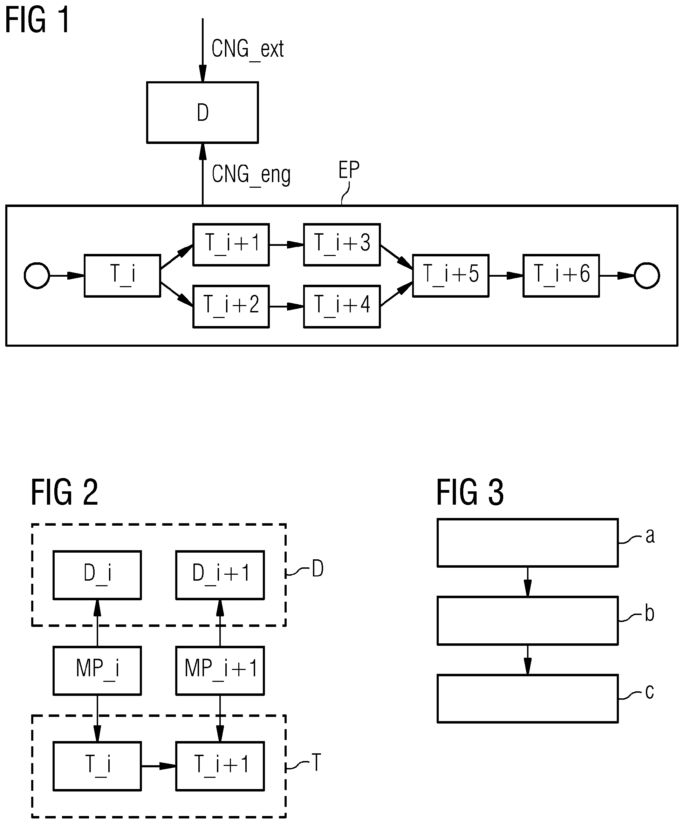

Fig. 1 shows an example of an engineering process, data and changes to the data. Engineering processes EP are data-intensive systems. All relevant data D is stored in a data repository and may be changed by external parties CNG_ext and/or by the engineers CNG_eng in the course of the engineering process EP. It is noted, that the data repository where the data is stored can be of the concentrated or distributed type.

An engineering process EP consists of a set of tasks T which operate on different forms of data D. Data sources can be:
- file shares with requirement and system specifications, tool output data, etc.
- a Sharepoint with customer input files, etc.
- a version control system (like Git or Subversion) for storing source code
- an Artifactory, containing binary artifacts etc.

All the data D on which the engineering tasks T (T_i, T_i+1, T_i+2 etc.) work form a big data repository - a kind of virtual database - containing all data D and artefacts that are relevant for the final system or product. The data D in the repository is constantly being changed in the course of the engineering process EP, either by external parties CNG_ext (e.g. if the customer supplies new customer input data) or by the various activities CNG_eng in the engineering process EP itself. It is of the utmost importance that all engineering tasks T work on the same set of data D, i.e., on the most up-to-date versions of the data D.

Example: Let the product of interest be a train control system. The set of customer input data D from the railway operator company contain the measurement tables, containing the coordinates of elements like signals, points, etc. These files are stored on a common file share. A dedicated task T of the engineering process EP reads these measurement tables and generates all necessary control elements accordingly. If not the newest version of these tables were used, the number and locations of the control elements may be wrong.

So, one of the main sources of error is that tasks T do not work on the latest versions of the data D and therefore return results that are outdated and are not in sync with the results of other tasks. In the following description of the invention, it is described how to avoid such errors and therefore guarantee data integrity and currentness.

Fig. 2 shows a diagram of tasks, a monitoring process and data. In the invention, each engineering task T_i, T_i+1, T_i+2 etc. (that works on data D of the data repository) should have an associated component called monitoring process MP. The main job of this component is to monitor the task-relevant data D for changes and notifies the respective task T whenever relevant changes were detected.

Each monitoring process MP runs as separate process and periodically monitors or polls respectively the data repository for changes. The polling cycle length (e.g., 10 min) depends on the application.

Each monitoring process MP needs to know the paths to the corresponding data D relevant to the respective task T. For each data D, the monitoring process MP needs to know the latest version of the data D on which the task T last worked. This can be implemented in several ways: Either the latest version is stored in a local monitoring process data store, a version control system is used or properties of the data D are stored that uniquely identify the version (e.g. an MD5 code).

In each polling cycle, the monitoring process MP does the following for each monitored data D:
- Let D_old be the old version of the data entity. (Of course, in the first cycle, D_old is empty.) Retrieve the newest version D_new from the data repository.
- Compare D_old and D_new
- If possible, create a delta file Δ, that contains the differences between D_old and D_new.
- If a difference was found: Notify the corresponding task T that there are data changes and provide the differences in a delta file Δ (if existent).

Depending on the engineering process management tool used, the notified engineering task T changes into another state (e.g. called "changed" or "invalid"), changes its color (e.g., to red), and sends a mail to the responsible task owner(s) to notify them that rework is required on this task T. The first part of this rework is typically a change impact analysis. If relevant changes were detected, engineering data must be adapted accordingly. This can set off a chain reaction - rework on task T_i data may lead to necessary rework on task T_i+1, detected by the monitoring process of task T_i+1.

By implementing a monitoring process MP the invention ensures that all external and internal changes to the data repository are updated by all tasks T that use these data D. Subsequent changes are propagated through the engineering process EP. An engineering process EP cannot be completed until all open changes reported by the monitoring processes MP have been processed.

Fig. 3 shows the invention according to a first embodiment. The figure shows the computer implemented method for providing consistency of data D in an engineering process EP, wherein the data D represents parameters of tasks T in the engineering process EP, comprising steps of:
a. Defining relevant data D_i for a task T_i;
b. Periodically monitoring the relevant data D_i for the task T_i;
c. Notifying the task T_i when changes in the data D_i occur.

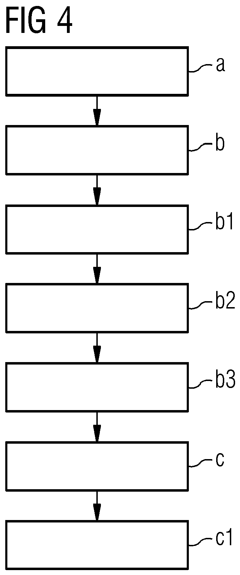

Fig. 4 shows the invention according to a second embodiment. In this embodiment, step b of the first embodiment of the invention comprises the following steps:

| | |
|---|---|
| b1. | Retrieving a latest version of the data D_i_new and a second-latest version of the data D_i_old by a monitoring process MP_i; |
| b2. | Comparing the latest version of the data D_i_new to the second-latest version of the data D_i_old by the monitoring process MP_i; |
| b3. | Creating a delta file Δ_i that comprises differences between the latest version of the data D_i_new and the second-latest version of the data D_i_old by the monitoring process MP_i when there are differences; |

and step c of the first embodiment of the invention comprises the following step:

| | |
|---|---|
| c1. | Providing the delta file Δ_i to the task T_i by the monitoring process MP_i when there are differences. |

It is noted, that the reference signs D, T, MP and Δ represent general data D, tasks T, monitoring processes MP and delta files Δ respectively and those reference signs denoted with an i, i_1 etc. indicate specific data, tasks, monitoring processes and delta files respectively that are in relation to each other as explained in the description.

### LIST OF REFERENCE SIGNS

- EP: Engineering process
- D: Data
- T: Task(s)
- MP: Monitoring process(es)
- Δ: Delta file(s)
- CNG_ext: Changes by external parties
- CNG_eng: Engineering changes

## Claims

1. Computer implemented method for providing consistency of data (D) in an engineering process (EP), wherein the data (D) represents parameters of tasks (T) in the engineering process (EP), comprising steps of:
a. Defining relevant data (D_i) for a task (T_i);
b. Periodically monitoring the relevant data (D_i) for the task (T_i);
c. Notifying the task (T_i) when changes in the data (D_i) occur.

2. Method of claim 1, wherein the monitoring in step b of claim 1 comprises the following steps:
| | |
|---|---|
| b1. | Retrieving a latest version of the data (D_i_new) and a second-latest version of the data (D_i_old) by a monitoring process (MP_i); |
| b2. | Comparing the latest version of the data (D_i_new) to the second-latest version of the data (D_i_old) by the monitoring process (MP_i); |
| b3. | Creating a delta file (Δ_i) that comprises differences between the latest version of the data (D_i_new) and the second-latest version of the data (D_i_old) by the monitoring process (MP_i) when there are differences; |
and wherein step c of claim 1 comprises the following step:
| | |
|---|---|
| c1. | Providing the delta file (Δ_i) to the task (T_i) by the monitoring process (MP_i) when there are differences. |

3. Method of any of the preceding claims, wherein there is at least one second task (T_i+1), at least one second relevant data (D_i+1) for the at least one second task (T_i+1) and at least one second monitoring process (MP_i+1).

4. Data processing apparatus, comprising means for carrying out the method of any of the claims 1 to 3.

5. Data processing apparatus according to claim 4, comprising means for:
a. Defining relevant data (D_i) for a task (T_i);
b. Periodically monitoring the relevant data (D_i) for the task (T_i);
c. Notifying the task (T_i) when changes in the data (D_i) occur.

6. Computer program product comprising instructions which, when the program is executed by a computer, cause the computer to carry out the method of any of the claims 1 to 3.

7. Computer-readable storage medium comprising instructions which, when executed by a computer, cause the computer to carry out the method of any of the claims 1 to 3.
